# EUROPEAN PATENT APPLICATION

(11) **EP 4 379 636 A1**
(43) Date of publication of application: **05.06.2024**
(21) Application number: 23743464.2
(22) Date of filing: 18.01.2023
(51) Int. Cl.: G06Q 30/018, G06Q 30/0601, H04L 9/00, G06F 21/44, G06Q 20/36

(54) **ASSET MANAGEMENT DEVICE AND ASSET MANAGEMENT METHOD**

(30) Priority: 19.01.2022 KR 20220007976
(71) Applicant: Samsung Electronics Co., Ltd., Suwon-si, Gyeonggi-do 16677 (KR)
(72) Inventor: YOON, Daewon, Suwon-si, Gyeonggi-do 16677 (KR); BAE, Mugong, Suwon-si, Gyeonggi-do 16677 (KR); JUNG, Dosung, Suwon-si, Gyeonggi-do 16677 (KR)
(74) Representative: Walaski, Jan Filip
(86) International application number: PCT/KR2023/000881
(87) International publication number: WO 2023/140618

(57) **Abstract**

An asset management method including obtaining a non-fungible token (NFT) asset identifier (ID) of an NFT asset linked to a real asset, mapping the obtained NFT asset ID to a wallet ID that is uniquely generated in a one-to-one manner in association with the real asset, and registering the mapped NFT asset ID and wallet ID on a blockchain, wherein the NFT asset is uniquely identifiable in association with the real asset through the registered NFT asset ID and the wallet ID that are integrated into the real asset.

## Description

### TECHNICAL FIELD

The disclosure relate to asset management devices and asset management methods. More particularly, the disclosure relates to an asset management device and method for integrating a non-fungible token (NFT) asset identifier (ID) of an NFT asset and a wallet ID assigned to a real asset linked with the NFT asset into the real asset.

### BACKGROUND ART

In recent years, various types of digital assets have been created and traded.

However, a user who desires to buy a digital asset is not able to directly purchase the digital asset using a flat currency such as Korean Won (KRW) but instead needs to convert the flat currency into a cryptocurrency such as Ethereum, Bitcoin, or the like on a cryptocurrency exchange and then buy the desired digital asset by using the cryptocurrency through a digital asset exchange.

Furthermore, even when selling a user's owned digital asset, the user is inconvenienced by having to convert, after selling the digital asset through a digital asset exchange, a cryptocurrency such as Ethereum, Bitcoin, or the like received as payment back into KRW on the cryptocurrency exchange.

In addition, users of cryptocurrency exchanges and digital asset exchanges have to pay certain fees for conversion and each transaction.

In addition, because users need to understand to a certain extent related technical concepts, such as creating a wallet identifier (ID) in order to trade digital assets, there have been barriers for the users to conveniently trade digital assets.

### DESCRIPTION OF EMBODIMENTS

### SOLUTION TO PROBLEM

According to an embodiment of the disclosure, an asset management method includes obtaining a non-fungible token (NFT) asset identifier (ID) of an NFT asset linked to a real asset. An asset management method includes mapping the obtained NFT asset ID to a wallet ID that is uniquely generated in a one-to-one manner in association with the real asset. An asset management method includes registering the mapped NFT asset ID and wallet ID on a blockchain. The NFT asset is uniquely identifiable in association with the real asset through the registered NFT asset ID and the wallet ID that are integrated into the real asset.

According to an embodiment of the disclosure, an asset management device includes a memory storing one or more instructions. An asset management device includes a processor configured to execute the one or more instructions stored in the memory to obtain an NFT asset ID of an NFT asset linked to a real asset. A processor configured to execute the one or more instructions stored in the memory to map the obtained NFT asset ID to a wallet ID that is uniquely generated in a one-to-one manner in association with the real asset. A processor configured to execute the one or more instructions stored in the memory to register the mapped NFT asset ID and wallet ID on a blockchain. A processor configured to execute the one or more instructions stored in the memory to control the NFT asset to be uniquely identifiable in association with the real asset through the registered NFT asset ID and the wallet ID that are integrated into the real asset.

According to an embodiment of the disclosure, a computer-readable recording medium has recorded thereon a program for performing an asset management method including obtaining an NFT asset ID of an NFT asset linked to a real asset. A computer-readable recording medium has recorded thereon a program for performing an asset management method including mapping the obtained NFT asset ID to a wallet ID that is uniquely generated in a one-to-one manner in association with the real asset. A computer-readable recording medium has recorded thereon a program for performing an asset management method including registering the mapped NFT asset ID and wallet ID on a blockchain. The NFT asset is uniquely identifiable in association with the real asset through the registered NFT asset ID and the wallet ID that are integrated into the real asset.

### BRIEF DESCRIPTION OF DRAWINGS

FIG. 1 is a diagram illustrating an example of an asset management device according to an embodiment of the disclosure.
FIG. 2 is a block diagram of a configuration of an asset management device according to an embodiment of the disclosure.
FIG. 3 is a block diagram of a detailed configuration of an asset management device according to an embodiment of the disclosure.
FIG. 4 is a flowchart of an asset management method according to an embodiment of the disclosure.
FIG. 5 is a detailed flowchart of an asset management method according to an embodiment of the disclosure.
FIG. 6 is a diagram illustrating an example in which an asset management device performs minting a digital asset as a non-fungible token (NFT), according to an embodiment of the disclosure.
FIG. 7A is a diagram illustrating an example of an asset management method according to the related art.
FIG. 7B is a diagram illustrating an example of an asset management method according to an embodiment of the disclosure.
FIG. 8 is a diagram illustrating an example of a real asset into which an NFT asset identifier (ID) and a wallet ID are integrated, according to an embodiment of the disclosure.
FIG. 9A is a flowchart of a method of trading a digital asset according to the related art.
FIG. 9B is a flowchart of a method of trading a digital asset according to an embodiment of the disclosure.
FIG. 10 is a diagram illustrating an example of a method of trading an NFT asset according to an embodiment of the disclosure.
FIG. 11 is a flowchart of a method, performed by a real asset producer, of producing real assets using an asset management method, according to an embodiment of the disclosure.
FIG. 12 is a flowchart of an example of trading a real asset by using an asset management method, according to an embodiment of the disclosure.
FIG. 13 is a diagram illustrating an example of a real asset according to an embodiment of the disclosure.
FIG. 14 is a diagram illustrating an example of a blockchain network system according to an embodiment of the disclosure.
FIG. 15 is a diagram illustrating an example of a real asset according to an embodiment of the disclosure.
FIG. 16 is a diagram illustrating another example of a real asset according to an embodiment of the disclosure.

### MODE OF DISCLOSURE

Throughout the disclosure, the expression "at least one of a, b or c" indicates only a, only b, only c, both a and b, both a and c, both b and c, all of a, b, and c, or variations thereof.

Embodiments of the disclosure will be described more fully hereinafter with reference to the accompanying drawings so that they may be easily implemented by one of ordinary skill in the art. However, the disclosure may have different forms and should not be construed as being limited to embodiments set forth herein.

The terms used in the disclosure are general terms currently widely used in the art based on functions described in the disclosure, but may have different meanings according to an intention of skilled persons in the relevant art, precedent cases, advent of new technologies, etc. Thus, the terms used herein should be defined not by simple appellations thereof but based on the meaning of the terms together with the overall description of the disclosure.

In addition, the terms used herein are only used to describe particular embodiments of the disclosure, and are not intended to limit the disclosure.

Furthermore, throughout the specification, it will be understood that when a part is referred to as being "connected" or "coupled" to another part, it may be directly connected to or electrically coupled to the other part with one or more intervening elements therebetween.

The use of the terms "the" and similar referents used in the specification, especially in the following claims, are to be construed to cover both the singular and the plural. Furthermore, operations of methods according to the disclosure described herein may be performed in any suitable order unless clearly specified herein. Embodiments of the disclosure are not limited to the described order of the operations.

Expressions such as "in some embodiments" or "in an embodiment" described in various parts of this specification do not necessarily refer to the same embodiment(s).

Some embodiments of the disclosure may be described in terms of functional block components and various processing operations. Some or all of such functional blocks may be implemented by any number of hardware and/or software components that execute specific functions. For example, functional blocks of the disclosure may be implemented by one or more microprocessors or by circuit components for performing certain functions. Furthermore, functional blocks according to the disclosure may be implemented with various programming or scripting languages. The functional blocks may be implemented using various algorithms executed on one or more processors. Furthermore, the disclosure may employ techniques of the related art for electronics configuration, signal processing, and/or data processing. The terms such as "mechanism", "element", "means", and "construction" may be used in a broad sense and are not limited to mechanical or physical components.

Furthermore, connecting lines or connectors shown in various figures are intended to represent exemplary functional connections and/or physical or logical couplings between components in the figures. In an actual device, connections between components may be represented by many alternative or additional functional relationships, physical connections, or logical connections.

As used herein, the term "unit" or "module" indicates a unit for processing at least one function or operation and may be implemented using hardware or software or a combination of hardware and software.

In addition, in the specification, the term "user" refers to a person who controls a function or operation of an asset management device by using an asset management method, and may include a viewer, an administrator, or an installation engineer.

In the specification, a "virtual asset" or "digital asset" may refer to an electronic token and all rights related thereto that have economic values and may be traded and transferred electronically.

Hereinafter, the disclosure will be described in detail with reference to the accompanying drawings.

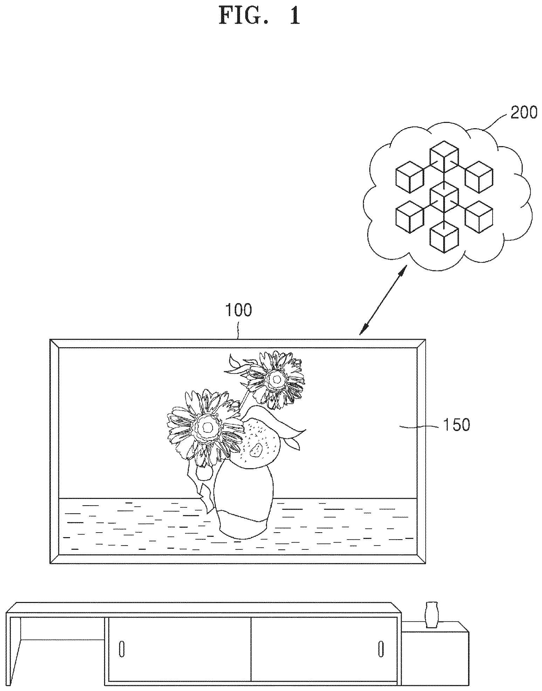

FIG. 1 is a diagram illustrating an example of an asset management device according to an embodiment of the disclosure.

Referring to FIG. 1, an asset management device 100 of the disclosure may be a TV, but this is merely an embodiment and may be implemented as any of various electronic devices including at least one processor 110. The asset management device 100 may also be referred to as an electronic device. For example, the asset management device 100 may be implemented in various forms such as a tablet PC, a digital camera, a camcorder, a laptop computer, a netbook computer, a desktop computer, an e-book terminal, a video phone, a digital broadcasting terminal, a personal digital assistant (PDA), a portable multimedia player (PMP), a navigation device, an MP3 player, a wearable device, a smart refrigerator, other home appliances, other mobile devices, etc. Also, the asset management device 100 may be a device configured to implement only an asset management method described in the disclosure without additional functions.

In particular, the disclosure may be easily implemented by a display device, such as a TV, including an audio outputter and a large video outputter, but are not limited thereto. In addition, the asset management device 100 may be implemented in a fixed or mobile form, and may be a digital broadcasting receiver capable of receiving digital broadcasts.

The asset management device 100 may be implemented not only as a flat display device but also as a curved display device with a screen having a curvature or a flexible display device with an adjustable curvature. An output resolution of the asset management device 100 may include, for example, High Definition (HD), Full HD, Ultra HD, or resolution higher than the Ultra HD.

The asset management device 100 of the disclosure may communicate with a blockchain network 200. The blockchain network 200 may be a network using blockchain technology.

Blockchain technology may refer to a data forgery prevention technology based on distributed computing technology. In detail, the blockchain technology may be a technology which allows data under management to be stored, on a peer-to-peer (P2P) basis, in a distributed data storage environment called 'blocks' formed by connecting pieces of small-size data in the form of a chain, so that no one may modify the stored data arbitrarily (without permission) and anyone may view a result of change.

All pieces of data propagated to users before a block was discovered are recorded in the block, and transmitted equally to all connected users in a P2P manner. Therefore, users may not arbitrarily modify or omit data. Each block has a date when a block is discovered and a link to the previous block, and a set of these blocks may be referred to as a blockchain. In other words, the blockchain technology is a technology for creating a bundle of numerous records.

A block is a unit for storing data and is divided into a body and a header. The body may include details of transactions, and the header may contain cryptographic codes such as a Merkle hash (a Merkle root) and a nonce (a random number related to encryption).

For example, one block may be generated roughly every 10 minutes.

Each block may be created by collecting transaction records and verifying their reliability and may be linked to the previous block to form a blockchain.

As another example, in the specification, arbitrary data propagated on a blockchain creates block data when a certain amount of data is accumulated, and the created block data may be verified by nodes in the blockchain and then linked to the previous block data.

In a blockchain, transaction records are not stored and managed in a centralized server, but individual servers participating in transactions gather to maintain and manage a network. An individual server, i.e., a participant, is called a node. In the disclosure, the asset management device 100 may correspond to one of the nodes.

Because the blockchain network 200 has no central administrator, a role of a node distributing a block is important in the blockchain network 200, and a new block is created only when the majority of participating nodes agree on the new block. Because nodes such as computers store the blockchain, even when some of the nodes are hacked so the existing contents are changed, data remains intact on a large number of nodes, and thus, the data may be continuously preserved.

Furthermore, in the specification, arbitrary data propagated to the blockchain are stored on nodes participating in the blockchain, and the nodes may verify whether the data is tampered with or forged by comparing it with data stored on each of the participating nodes in a periodic or non-periodic manner.

The blockchain network 200 may be implemented entirely in hardware or partially in hardware and partially in software, and it may be composed of one or more servers or computers, one or more terminals, etc.

According to an embodiment of the disclosure, by using a smart contract technology to which an Ethereum (ERC-721)-based blockchain is applied, an "NFT asset" is an irreplaceable digital asset and may be created by assigning a unique identifier (ID) and metadata information to content so that a unique identification code may identify the asset without changing even after several transactions.

Existing virtual assets such as Bitcoin and Ethereum may be exchanged at equivalency because coins owned by people, e.g., A and B, are indistinguishable like traditional currency. On the other hand, in the case of NFT assets, each token has unique information and properties and represents a completely different asset because it contains at least one piece of information among a unique name, a unique symbol, an owner, and other metadata information of a product for which an NFT is issued so that a history of its owners is tracked, etc., and thus, each token may not be considered as having the same value even though they are implemented visually in the same form.

In the embodiment of the disclosure of FIG. 1, a digital painting C 150 of a famous painter, which is displayed on the asset management device 100, may be an NFT asset.

In other words, the digital painting C 150 of the famous painter, which is displayed on the asset management device 100, is irreplaceable and may be assigned a unique asset identifier (ID) and metadata information so that a unique identification code may identify the digital painting C 150 without changing even after several transactions.

In the embodiment of the disclosure of FIG. 1, the digital painting C 150 that is the NFT asset may be displayed on only one asset management device 100.

In this case, the digital figure C 150 that is the NFT asset may be linked or integrated with the asset management device 100 which is a real asset.

In the disclosure, "real assets" may be tangible assets. For example, the real assets may refer to all tangible assets such as TVs, clothes, shoes, bags, etc.

In the embodiment of the disclosure of FIG. 1, because a TV that is the asset management device 100 is also a tangible asset, the TV may be used as a real asset.

The asset management device 100 according to the embodiment of the disclosure may obtain an NFT asset ID of the digital figure C 150 linked or integrated therewith.

A method, performed by the asset management device 100, of obtaining an NFT asset ID of an NFT asset will be described below.

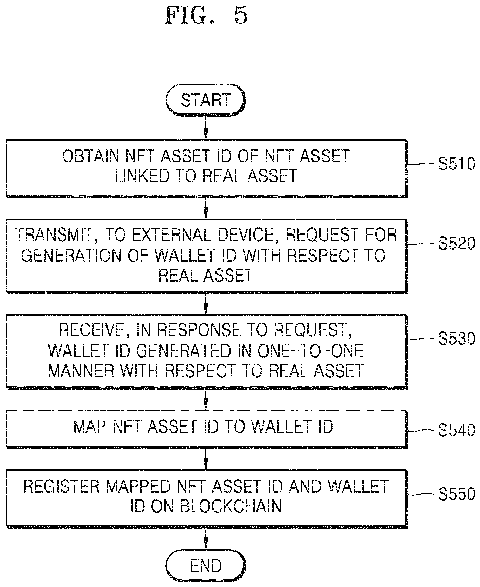

The asset management device 100 may obtain a wallet ID corresponding in a one-to-one manner thereto. A method, performed by the asset management device 100, of obtaining a wallet ID corresponding in a one-to-one manner to the asset management device 100 itself will be described below with reference to FIG. 5, etc.

The asset management device 100 may map the obtained NFT asset ID to the wallet ID generated by corresponding in a one-to-one manner to the asset management device 100 itself and register the mapped NFT asset ID and wallet ID on the blockchain network 200.

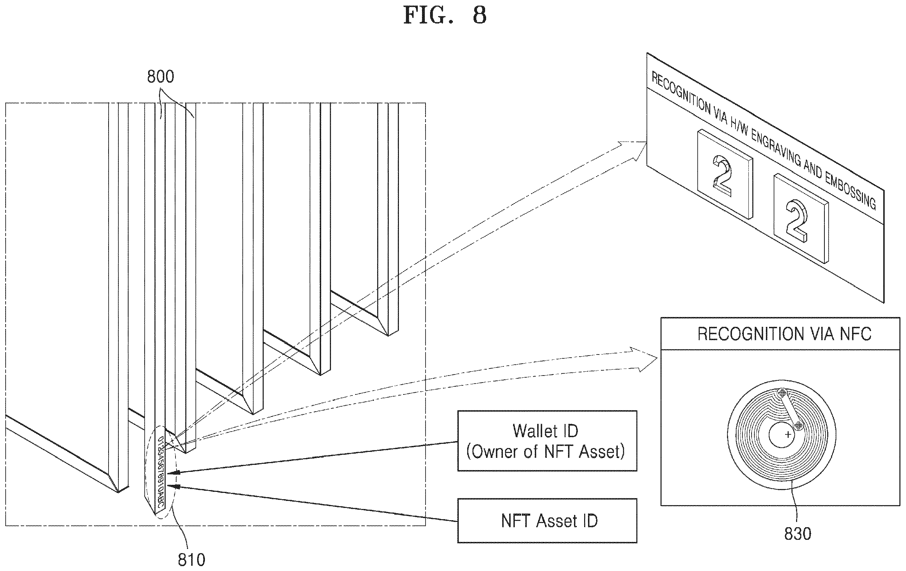

Furthermore, the asset management device 100 may integrate the NFT asset ID and the Wallet ID thereinto. A method of integrating an NFT asset ID and a wallet ID will be described below with reference to FIG. 8.

The asset management device 100 may map the NFT asset ID for the digital painting C 150 of the famous painter and the wallet ID obtained by corresponding to the asset management device 100 and register the mapped NFT asset ID and the wallet ID together on the blockchain, so that the NFT asset may be easily transferred only by transferring the TV, i.e., the asset management device 100.

In the related art, to trade an NFT asset, a process of transferring the NFT asset from a seller's virtual wallet to a buyer's virtual wallet is required.

The asset management device 100 and an asset management method according to the disclosure integrate a wallet ID and an NFT asset ID into a real asset, thereby allowing a virtual wallet and an NFT asset to be transferred together when the real asset is transferred.

Therefore, there is no need for a process of transferring an NFT asset from a seller's virtual wallet to a buyer's virtual wallet in order to trade the NFT asset.

According to the asset management method, because an NFT asset ID and a wallet ID are transferred together only by transferring a corresponding real asset, a user does not need to convert a flat currency such as Korean Won (KRW) into digital coins on a coin exchange and then purchase a digital asset in order to transfer an NFT asset from another virtual asset wallet to his or her virtual wallet.

In other words, a buyer of a digital asset may trade the digital asset together by purchasing a real asset corresponding thereto directly using KRW without converting KRW into coins.

Furthermore, in the asset management method according to the disclosure, because an NFT asset ID and a wallet ID are transferred together only by transferring a corresponding real asset, the user does not need to use a digital asset exchange and thus pay GAS and/or any other transaction fee in return for trading a digital asset through a digital asset exchange.

Also, the user may conveniently trade a digital asset by simply exchanging a corresponding real asset without needing to understand or identify concepts of digital assets and a blockchain.

Moreover, while existing NFT assets exist only online, as seen in the embodiment of the disclosure of FIG. 1, according to the asset management method of the disclosure, the digital painting C 150 that is the NFT asset may be associated with the audio outputter and/or the video outputter included in the TV 100 that is the real asset and appreciated by the user.

While in the embodiment of the disclosure of FIG. 1, the asset management device 100 is the same as the real asset into which the NFT asset ID and the wallet ID are integrated, the asset management device 100 may not be the real asset into which the NFT asset ID and Wallet ID are integrated according to an embodiment of the disclosure. A detailed description thereof will be provided later.

Also, while in the embodiment of the disclosure of FIG. 1, the digital painting C 150 of the famous painter, which is the NFT asset, is an asset simply linked with the TV 100 that is the real asset, the NFT asset may be a digital asset created to correspond to the real asset according to an embodiment of the disclosure.

For example, when the real asset is a luxury bag, the NFT asset may be a virtual luxury bag created online with the same shape and design as those of the luxury bag.

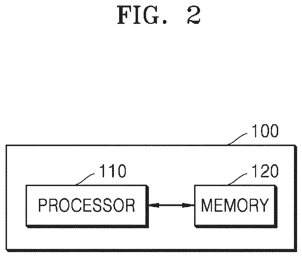

FIG. 2 is a block diagram of a configuration of an asset management device according to an embodiment of the disclosure.

Referring to FIG. 2, the asset management device 100 may include a processor 110 and a memory 120.

The memory 120 may store programs necessary for processing or control operations performed by the processor 110. Furthermore, the memory 120 may store data input to or output from the asset management device 100.

The memory 120 may include at least one type of storage medium, i.e., at least one of a flash memory-type memory, a hard disk-type memory, a multimedia card micro-type memory, a card-type memory (e.g., an SD card or an XD memory), random access memory (RAM), static RAM (SRAM), read-only memory (ROM), electrically erasable programmable ROM (EEPROM), PROM, a magnetic memory, a magnetic disc, or an optical disc.

The memory 120 may store one or more instructions executable by the processor 110.

In an embodiment of the disclosure, the memory 120 may store various types of information input/output via an input/output (I/O) interface (not shown).

In an embodiment of the disclosure, the memory 120 may store instructions that cause the processor 110 to obtain an NFT asset ID of an NFT asset linked to a real asset, map the NFT asset ID to a wallet ID generated in a one-to-one manner for the real asset, register the mapped NFT asset ID and wallet ID on a blockchain, and integrate the NFT asset ID and the wallet ID into the real asset.

In the disclosure, "integration" may refer to combining things to make an undivided whole. Various methods for integration will be described later in FIG. 8, etc.

The processor 110 controls all operations of the asset management device 100 and may be used in the same sense as a controller. The processor 110 may control all the operations of the asset management device 100 and a flow of signals between the internal components of the asset management device 100 and process data.

When there is an input by the user or preset and stored conditions are satisfied, the processor 110 may execute an operation system (OS) and various applications stored in the memory 120.

The processor 110 may include RAM (not shown) that stores signals or data input from outside of the asset management device 100 or is used as a storage area corresponding to various operations performed by the asset management device 100, and ROM (not shown) that stores a control program for controlling the asset management device 100.

The processor 110 may include a single core, a dual core, a triple core, a quad core, or a number of cores equal to multiples of thereof. Furthermore, the processor 110 may include a plurality of processors. For example, the processor 110 may be implemented as a main processor (not shown) and a sub processor (not shown) operating in a sleep mode.

In addition, the processor 110 may include at least one of a central processing unit (CPU), a graphic processing unit (GPU), or a video processing unit (VPU). Alternatively, according to an embodiment of the disclosure, the at least one processor may be implemented as a system on chip (SoC) that integrates at least one of a CPU, a GPU, or a VPU.

The processor 110 may control various components of the asset management device 100 by executing one or more instructions stored in the memory 120.

In an embodiment of the disclosure, the processor 110 may determine a real asset and a digital asset to be linked to each other.

In an embodiment of the disclosure, the processor 110 may mint, as an NFT, a digital asset to be linked to a real asset.

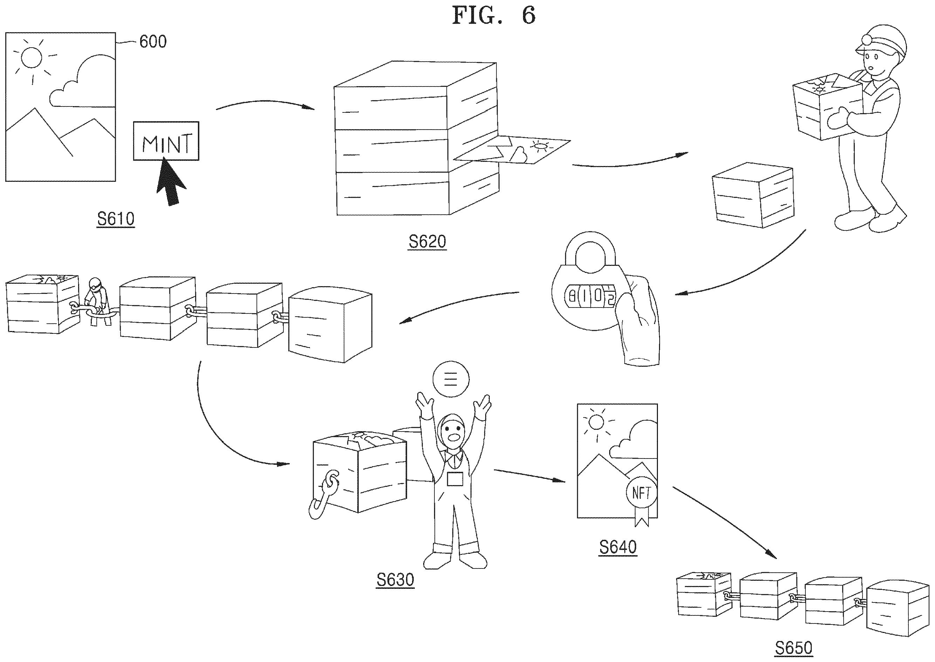

In the disclosure, NFT minting may refer to a process of issuing an NFT asset from a digital asset. A detailed description of NFT minting will be provided later with reference to FIG. 6, etc.

In an embodiment of the disclosure, an NFT minting process may be performed by an external device other than the asset management device 100.

In an embodiment of the disclosure, the processor 110 may obtain an NFT asset ID of an NFT asset linked to a real asset.

In an embodiment of the disclosure, the processor 110 may map the NFT asset ID to a wallet ID generated in a one-to-one manner for the real asset, and register the mapped NFT asset ID and wallet ID on the blockchain.

In an embodiment of the disclosure, the processor 110 may control the NFT asset ID and the wallet ID to be integrated into the real asset.

In an embodiment of the disclosure, the processor 110 may generate a digital asset corresponding to a real asset and mint the digital asset as an NFT to obtain an NFT asset ID.

In an embodiment of the disclosure, the processor 110 may determine a particular real asset as an asset to be linked with a pre-existing NFT asset, and may control an NFT asset ID of the NFT asset to be integrated into the determined real asset.

In an embodiment of the disclosure, the processor 110 may transmit, to an external device, a request for generation of a wallet ID for a real asset and receive, in response to the request, a wallet ID generated in a one-to-one manner for the real asset.

In an embodiment of the disclosure, the processor 110 may directly generate a wallet ID with respect to a real asset.

In an embodiment of the disclosure, the processor 110 may associate an NFT asset with an audio outputter and a video outputter included in or connected to the real asset, so that the NFT asset may be appreciated and enjoyed by the user.

In an embodiment of the disclosure, the processor 110 may verify whether the NFT asset or the real asset is authentic by using the NFT asset ID and the wallet ID integrated into the real asset.

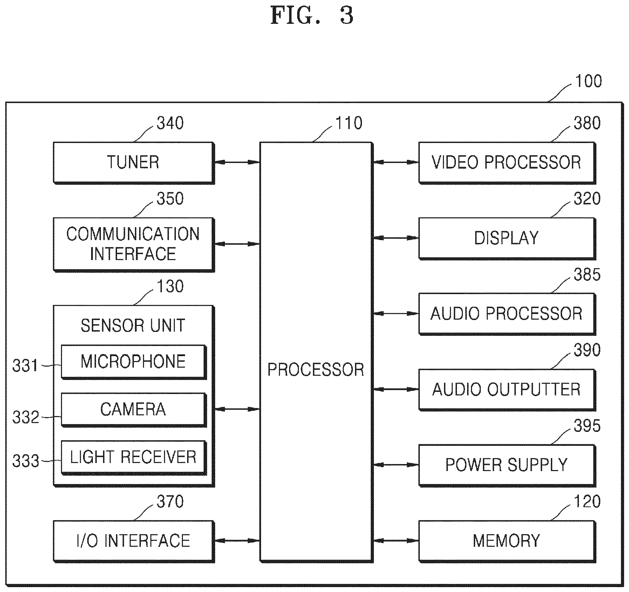

FIG. 3 is a block diagram of a detailed configuration of an asset management device according to an embodiment of the disclosure.

An asset management device 100 is an embodiment of the asset management device 100 described with reference to FIGS. 1 and 2. For example, the asset management device 100 of FIG. 3 may be a TV.

Referring to FIG. 3, the asset management device 100 may include a tuner 340, a processor 110, a display 320, a communication interface 350, a sensor unit 130, an I/O interface 370, and a video processor 380, an audio processor 385, an audio outputter 390, a memory 120, and a power supply 395.

The processor 110 of FIG. 3 corresponds to the processor 110 of FIG. 2, and the memory 120 of FIG. 3 corresponds to the memory 120 of FIG. 2. Thus, descriptions already provided above will be omitted below.

According to an embodiment of the disclosure, the communication interface 350 may include a Wi-Fi module, a Bluetooth module, an infrared communication module, a wireless communication module, a local area network (LAN) module, an Ethernet module, a wired communication module, etc. In this case, each communication module may be implemented in the form of at least one hardware chip.

The Wi-Fi module and the Bluetooth module perform communications according to a Wi-Fi method and a Bluetooth method, respectively. When the Wi-Fi module or the Bluetooth module are used, various types of connection information such as a service set identifier (SSID) and a session key may be first transmitted and received, a communication connection may be established using the connection information, and then various types of information may be transmitted and received. The wireless communication module may include at least one communication chip for performing communication according to various communication standards such as Zigbee, 3rd generation (3G), 3rd Generation Partnership Project (3GPP), long-term evolution (LTE), LTE Advanced (LTE-A), 4th generation (4G), 5th generation (5G), etc.

According to an embodiment of the disclosure, the communication interface 350 may receive a user input from an external device such as a user's mobile device.

According to an embodiment of the disclosure, the tuner 340 may tune and then select only a frequency of a channel that is to be received by the asset management device 100 from among many radio wave components by performing amplification, mixing, resonance, etc. of a broadcast signal received in a wired or wireless manner. The broadcast signal includes, for example, audio, video, and additional information (e.g., an electronic program guide (EPG)).

The tuner 340 may receive broadcast signals from various sources such as terrestrial broadcasting, cable broadcasting, satellite broadcasting, Internet broadcasting, etc. The tuner 340 may receive a broadcast signal from a source such as analog broadcasting, digital broadcasting, or the like.

The sensor unit 130 detects a user around the asset management device 100, and may include at least one of a microphone 331, a camera 332, or a light receiver 333.

In an embodiment of the disclosure, the sensor unit 130 may detect a real asset near the asset management device 100, and transmit, to the processor 110, information about an NFT asset ID and a wallet ID integrated into the sensed real asset.

The microphone 331 receives a voice uttered by the user. The microphone 331 may convert the received voice into an electrical signal and output the electrical signal to the processor 110. The microphone 331 may use various noise removal algorithms to remove noise occurring in the process of receiving an external sound signal.

The camera 332 may obtain image frames from a video or still images. An image captured via an image sensor may be processed by the processor 110 or a separate image processor (not shown).

An image frame captured by the camera 332 may be stored in the memory 120 or transmitted outside via the communication interface 350. Two or more cameras 332 may be provided according to a configuration of the asset management device 100.

The light receiver 333 receives an optical signal (including a control signal) from an external remote control device (not shown). The light receiver 333 may receive an optical signal corresponding to a user input (e.g., touching, pressing, touch gesture, voice, or motion) from the external remote control device. A control signal may be extracted from the received optical signal according to control by the processor 110. For example, the light receiver 333 may receive, from the external remote control device, a control signal corresponding to a channel up/down button for changing channels.

Although FIG. 3 shows the sensor unit 130 includes the microphone 331, the camera 332, and the light receiver 333, the sensor unit 130 is not limited thereto, and may include at least one of a magnetic sensor, an acceleration sensor, a temperature/humidity sensor, an infrared sensor, a gyroscope sensor, a position sensor (e.g., a GPS), a barometric pressure sensor, a proximity sensor, an RGB sensor, an illuminance sensor, a radar sensor, a lidar sensor, or a Wi-Fi signal receiver. Because the function of each sensor may be intuitively inferred from its name by those of ordinary skill in the art, detailed descriptions thereof will be omitted below.

Although FIG. 3 shows that the sensor unit 130 of FIG. 3 is provided in the asset management device 100, the sensor unit 130 is not limited thereto, and may be provided in a control device, such as a remote controller, which is located independently of the asset management device 100 and communicates with the asset management device 100.

When the sensor unit 130 is provided in the control device provided in the control device separately from the asset management device 100, the control device may digitize information sensed by the sensor unit 130 and transmit the digitized information to the asset management device 100. The control device may communicate with the asset management device 100 using short-range communication including infrared, Wi-Fi, or Bluetooth.

The I/O interface 370 receives video (e.g., a moving image, etc.), audio (e.g., voice, music, etc.), and additional information (e.g., an EPG, etc.), etc. from outside of the asset management device 100 according to control by the processor 110. The I/O interface 370may include one of a High-Definition Multimedia Interface (HDMI), a Mobile High-Definition Link (MHL), a Universal Serial Bus (USB), a Thunderbolt, a Video Graphics Array (VGA) port, an RGB port, a D-subminiature (D-Sub), a Digital Visual Interface (DVI), a component jack, and a PC port.

The video processor 380 processes video data received by the asset management device 100. The video processor 380 may perform various types of image processing, such as decoding, scaling, noise removal, frame rate conversion, resolution conversion, etc. on the video data.

The display 320 converts an image signal, a data signal, an on-screen display (OSD) signal, a control signal, etc., processed by the processor 110, to generate driving signals. The display 320 may be implemented as a plasma display panel (PDP), a liquid crystal display (LCD), an organic light-emitting diode (OLED), a flexible display, etc., and may also be implemented as a three-dimensional (3D) display. Also, the display 320 may be configured as a touch screen and used as an input device as well as an output device.

The display 320 may output various types of content input via the communication interface 350 or the I/O interface 370. Furthermore, the display 320 may output, on a screen, information input by the user via the I/O interface 370.

The display 320 may include a display panel. The display panel may be an LCD panel or a panel including various light-emitting materials, such as an LED, an OLED, a cold cathode fluorescent lamp (CCFL), etc. Furthermore, the display panel may include not only a flat display device but also as a curved display device that is a screen having a curvature or a flexible display device with an adjustable curvature. The display panel may be a 3D display panel or an electrophoretic display panel.

An output resolution of the display panel may include, for example, HD, Full HD, Ultra HD, or resolution higher than the Ultra HD.

In the embodiment of the disclosure of FIG. 3, the asset management device 100 is illustrated as including the display 320, but is not limited thereto. The asset management device 100 may be connected to a separate display apparatus including a display by using wired or wireless communication and configured to transmit a video/audio signal to the display apparatus.

The audio processor 385 processes audio data. The audio processor 385 may perform various types of processing, such as decoding, amplification, noise filtering, etc., on the audio data. Moreover, the audio processor 385 may include a plurality of audio processing modules to process audio corresponding to a plurality of pieces of content.

The audio outputter 390 outputs audio contained in a broadcast signal received via the tuner 340 according to control by the processor 110. The audio outputter 390 may output audio (e.g., a voice, a sound) input via the communication interface 350 or the I/O interface 370. Furthermore, the audio outputter 390 may output audio stored in the memory 120 according to control by the processor 110. The audio outputter 390 may include at least one of a speaker, a headphone output terminal, or a Sony/Phillips Digital Interface (S/PDIF) output terminal.

The power supply 395 supplies, according to control by the processor 110, power input by an external power source to internal components of the asset management device 100. The power supply 395 may also supply, according to control by the processor 110, power output from one or more batteries (not shown) located within the asset management device 100 to the internal components.

The memory 120 may store various pieces of data, programs, or applications for driving and controlling the asset management device 100 according to control by the processor 110. Although not shown in FIG. 3, the memory 120 may include a broadcasting receiving module, a channel control module, a volume control module, a communication control module, a voice recognition module, a motion recognition module, a light receiving module, a display control module, an audio control module, an external input control module, a power control module, a power control module of a wirelessly (e.g., Bluetooth) connected external device, a voice database (DB), or a motion DB. The modules and DBs of the memory 120 not shown in FIG. 3 may be implemented in the form of software in order to perform a broadcast reception control function, a channel control function, a volume control function, a communication control function, a voice recognition function, a motion recognition function, a light receiving control function, a display control function, an audio control function, an external input control function, a power control function, or a power control function of the wirelessly (e.g., Bluetooth) connected external device. The processor 110 may perform the respective functions by using the software stored in the memory 120.

Moreover, the block diagrams of the asset management device 100 illustrated in FIGS. 2 and 3 are block diagrams for an embodiment of the disclosure. Each of the components in a block diagram may be integrated, added, or omitted according to a specification of the asset management device 100 that is actually implemented. In other words, two or more components may be combined into a single component, or a single component may be split into two or more components when necessary. Furthermore, functions performed in each block are intended to describe embodiments of the disclosure, and a specific operation or device related to the functions does not limit the scope of the disclosure.

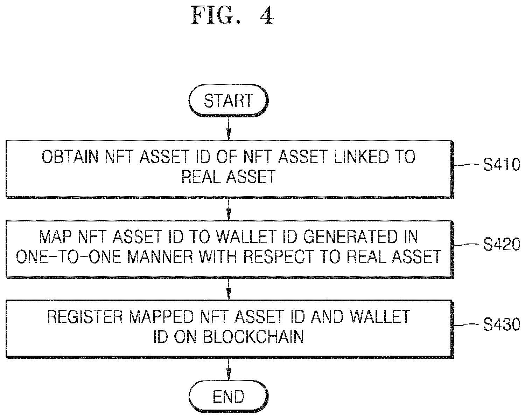

FIG. 4 is a flowchart of an asset management method according to an embodiment of the disclosure.

Referring to FIG. 4, the asset management device 100 may obtain an NFT asset ID of an NFT asset linked to a real asset (S410).

In an embodiment of the disclosure, the real asset may be the asset management device 100 itself like in the embodiment of the disclosure of FIG. 1.

In an embodiment of the disclosure, the real asset may be an asset having a form different from that of the asset management device 100.

In an embodiment of the disclosure, the asset management device 100 may generate a digital asset corresponding to the real asset and then mint the digital asset as an NFT to thereby obtain an NFT asset ID. For example, when the real asset is a luxury bag, the asset management device 100 may generate a virtual luxury bag corresponding to the real luxury bag as a digital asset and mint the virtual luxury bag as an NFT.

For example, the virtual luxury bag corresponding to the real luxury bag may be a virtual luxury bag having the same design, model, color, and brand as the real luxury bag.

In an embodiment of the disclosure, the asset management device 100 may determine a particular real asset as an asset to be linked to an NFT asset and then integrate an NFT asset ID of the NFT asset into the determined real asset to thereby obtain the NFT asset ID of the NFT asset linked to the real asset.

For example, the asset management device 100 may determine a display device, which is a real asset, as an asset to be linked to a painting C of a famous painter, which is an NFT asset. In an embodiment of the disclosure, when the display device that is the real asset is determined as an asset to be linked to the painting C of the famous painter, which is the NFT asset, the painting C of the famous painter may be appreciated only on the linked display device.

In the disclosure, even when a digital asset corresponding to a real asset is generated and minted as an NFT, the real asset may be linked to the digital asset.

The asset management device 100 may map the NFT asset ID to a wallet ID generated in a one-to-one manner for the real asset (S420).

A method of generating a wallet ID in a one-to-one manner for a real asset will be described below with reference to FIG. 5, etc.

In the disclosure, the real asset may have a unique wallet ID.

In the disclosure, the wallet ID may be a virtual wallet ID.

In an embodiment of the disclosure, the asset management device 100 may map the NFT asset ID obtained as a result of completing the NFT minting to the wallet ID uniquely generated for the real asset.

The asset management device 100 may register the mapped NFT asset ID and wallet ID on a blockchain (S430).

The asset management device 100 may integrate the NFT asset ID and the wallet ID by registering the mapped NFT asset ID and the wallet ID together on the blockchain.

Furthermore, the asset management device 100 may integrate the NFT asset ID and the wallet ID into the real asset.

A detailed description thereof will be described later with reference to FIG. 8, etc.

FIG. 5 is a detailed flowchart of an asset management method according to an embodiment of the disclosure.

Because operation S510 of FIG. 5 may correspond to operation S410 of FIG. 4, operation S540 of FIG. 5 may correspond to operation S420 of FIG. 4, and operation S550 of FIG. 5 may correspond to operation S430 of FIG. 4, descriptions already provided above will be omitted below.

Referring to FIG. 5, the asset management device 100 may obtain an NFT asset ID of an NFT asset linked to a real asset (S510).

The asset management device 100 may transmit, to an external device, a request for generation of a wallet ID for the real asset (S520).

In detail, when the asset management device 100 is a real asset, the asset management device 100 may transmit, to an external device, a request for generation of a wallet ID for the asset management device 100 itself. When a separate real asset independent of the asset management device 100 exists, the asset management device 100 may transmit a request for generation of a wallet ID for the separate real asset. For example, when a luxury bag is a real asset, the asset management device 100 may transmit a request for generation of a wallet ID for the luxury bag.

In an embodiment of the disclosure, the asset management device 100 may transmit an identifier of the real asset when transmitting the request for generation of a wallet ID therefor.

In an embodiment of the disclosure, the asset management device 100 may separately manage information about which wallet ID is integrated with a corresponding real asset by using an identifier of the real asset.

In an embodiment of the disclosure, the asset management device 100 may identify which wallet ID is integrated with a corresponding real asset by using information recorded on a blockchain instead of separately managing such information.

The external device may be a device capable of generating a wallet ID or a device allowing another device to generate a wallet ID.

In the disclosure, a wallet is a symbolic concept that allows a user to store his or her digital asset, and a wallet ID may be a unique ID assigned to each wallet.

In an embodiment of the disclosure, the wallet ID may be obtained by requesting a wallet ID generating site to generate it.

The asset management device 100 may receive, in response to the request, a wallet ID generated in a one-to-one manner for the real asset (S530).

In an embodiment of the disclosure, the asset management device 100 may receive the generated wallet ID from the external device that has transmitted the request for generation of the wallet ID.

In an embodiment of the disclosure, the asset management device 100 may receive the generated wallet ID from a separate device other than the external device that has transmitted the request for generation of the wallet ID.

In an embodiment of the disclosure, the asset management device 100 may directly generate the wallet ID.

The asset management device 100 may map the NFT asset ID to the wallet ID generated in a one-to-one manner for the real asset (S540).

The asset management device 100 may register the mapped NFT asset ID and wallet ID on a blockchain (S550).

FIG. 6 is a diagram illustrating an example in which an asset management device performs NFT minting according to an embodiment of the disclosure.

In the disclosure, NFT minting may refer to a process of issuing an NFT asset from a digital asset.

The asset management device 100 may determine a digital asset 600 to be minted as an NFT and upload it online (S610).

For example, the digital asset 600 to be minted as an NFT may be virtual assets such as a digital painting, a virtual bag, a virtual watch, a virtual ring, etc., specially produced music videos, celebrity autographs, photos, or the like.

In the embodiment of the disclosure of FIG. 6, the asset management device 100 may transmit the uploaded digital asset 600 to at least one miner (S620).

In the disclosure, a miner may be a block controller that creates a new block or controls an existing block and receives a cryptocurrency as a reward.

The transmitted digital asset 600 may be minted as an NFT and then added to a blockchain by a miner.

The asset management device 100 may pay fees to a miner who has successfully minted the digital asset 600 as an NFT (S630).

When the minting is completed, the asset management device 100 may obtain a unique NFT asset ID for the digital asset 600 minted as the NFT (S640).

The asset management device 100 may map the NFT asset ID to a wallet ID for the real asset and register the NFT asset ID and the wallet ID together on a blockchain (S650).

The embodiment of the disclosure of FIG. 6 is merely an example, and in an embodiment of the disclosure, the asset management device 100 may omit or add some operations.

For example, the asset management device 100 may map the NFT asset ID to the wallet ID for the real asset when the NFT asset is registered on the blockchain for the first time, so that the NFT asset ID and the wallet ID are registered together on the blockchain. In this case, operation S650 may be omitted.

In an embodiment of the disclosure, when the asset management device 100 has control over blocks, the asset management device 100 may directly perform NFT minting.

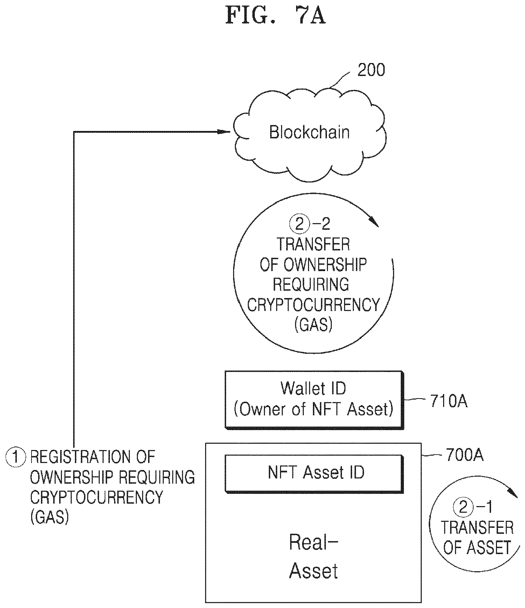

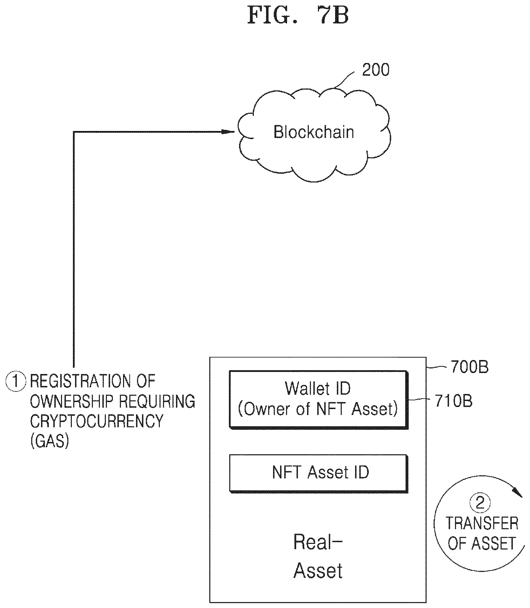

FIG. 7A is a diagram illustrating an example of an asset management method according to the relate art, and FIG. 7B is a diagram illustrating an example of an asset management method according to an embodiment of the disclosure.

According to the asset management method of the related art (FIG. 7A), when trading an NFT asset linked to a real asset 700A, a user had to create a separate wallet ID 710A for trading the NFT asset that is a digital asset.

Furthermore, even though the real asset 700A and the NFT asset were linked to each other, transfer of the real asset 700A and transfer of the NFT asset had to be performed according to separate processes.

In other words, after performing transfer of the real asset 700A (②-1), the user had to perform a separate ownership transfer process (②-2) on a digital asset exchange to transfer the ownership of the NFT asset.

In addition, when a digital asset was traded through the digital asset exchange, all information regarding the transfer of ownership of the digital asset had to be registered on the blockchain, and GAS and a transaction fee had to be paid for each transaction as a commission to perform this procedure.

According to the asset management method of the disclosure (FIG. 7B), a wallet ID 710B for trading a digital asset including an NFT asset may be generated in advance when a real asset 700B is produced.

Therefore, when trading the NFT asset linked to the real asset 700B, the user does not need to separately generate the wallet ID 710B for trading the NFT asset that is a digital asset but may use the wallet ID 710B generated together during production of the real asset 700B.

In an embodiment of the disclosure, the wallet ID 710B may be separately generated after the real asset 700B is produced. Even in this case, because the wallet ID 710B is integrated into the real asset 700B and exists together with the real asset 700B, the user may use the wallet ID 710B integrated into the real asset 700B without needing to separately generate the wallet ID 710B for trading the NFT asset.

In the asset management method according to an embodiment of the disclosure (FIG. 7B), because the NFT asset ID and the wallet ID 710B are integrated into the real asset 700B, and thus, the NFT asset ID and the wallet ID are also transferred when the real asset 700B is transferred, the transfer of ownership does not need to be performed at the digital asset exchange after transferring the real asset 700B in order to transfer the ownership of the NFT asset linked to the real asset 700B.

The transfer of ownership on the digital asset exchange is to move an NFT asset from a seller's wallet ID to a buyer's wallet ID, and in this regard, in an asset management method according to the disclosure, a wallet ID is integrated into a real asset such that there is no need to perform transfer of the NFT asset at the digital asset exchange because the wallet ID itself identifying an owner of the NFT asset becomes the buyer's when the real asset is transferred.

Therefore, the user does not need to pay fees for performing an NFT asset transfer procedure.

In this case, because a wallet ID and an NFT asset ID are initially stored together on the blockchain even when information regarding the transfer of ownership is not stored on the blockchain, the wallet ID and the NFT asset ID integrated into the real asset may be recognized, and the authenticity of the real asset may be verified by respectively comparing the recognized wallet ID and NFT asset ID with the wallet ID and the NFT asset stored on the blockchain.

FIG. 8 is a diagram illustrating an example of a real asset into which an NFT asset ID and a wallet ID are integrated, according to an embodiment of the disclosure.

In an embodiment of the disclosure, a real asset may be a picture frame TV. Like a picture frame, a picture frame TV may include a frame (bezel) having various shapes, designs, and colors. In this case, for each TV, a frame having a different shape, design, or color may be applied.

In an embodiment of the disclosure, a frame of the picture frame TV may be uniquely manufactured according to a user's selection.

In an embodiment of the disclosure, the frame may be a limited edition product produced by a famous sculptor.

The asset management device 100 may generate a digital asset corresponding to each frame and mint the digital asset as an NFT.

In an embodiment of the disclosure, after the asset management device 100 first generates a digital asset corresponding to each frame and mints the digital asset as an NFT, a real asset corresponding to the digital asset may be produced.

In an embodiment of the disclosure, after first generating each frame as a digital asset and then producing a real asset corresponding to the digital asset, the asset management device 100 may mint the digital asset as an NFT.

In an embodiment of the disclosure, a frame may be assigned a unique wallet ID generated when or after the frame is produced. The wallet ID may be generated using the method according to the embodiment of the disclosure of FIG. 5.

In an embodiment of the disclosure, the asset management device 100 may generate a digital asset corresponding to a frame and mint the digital asset as an NFT to thereby obtain an NFT asset ID. NFT minting may be performed according to the embodiment of the disclosure of FIG. 6.

The NFT asset ID and the wallet ID may be integrated into the real asset frame using various methods.

In an embodiment of the disclosure, the NFT asset ID and the wallet ID may be integrated into the real asset using a hardware-based method. For example, the NFT asset ID and the wallet ID may be imprinted in the frame among frames 800 as indicated by 810.

In an embodiment of the disclosure, the NFT asset ID and the wallet ID may be imprinted in the real asset using engraving or embossing.

In an embodiment of the disclosure, the imprinted NFT asset ID and wallet ID may be recognized by other devices when manually input by the user.

In an embodiment of the disclosure, the imprinted NFT asset ID and wallet ID may be automatically recognized by other devices in an electronic manner.

In an embodiment of the disclosure, the NFT asset ID and the wallet ID may be integrated into the real asset by using a software-based method.

In an embodiment of the disclosure, the NFT asset ID and the wallet ID may be manufactured in the form of a small memory such as a chip 830 including information about the NFT asset ID and the wallet ID, and the chip 830 may be attached to or included in the real asset.

For example, the NFT asset ID and the wallet ID may be stored in a small and thin chip by using a software-based method. A chip containing information about an NFT asset ID and a wallet ID may be integrated in various ways, e.g., by attaching it to or embedding it in various real assets such as luxury bags, luxury sneakers, and frames of TVs.

In an embodiment of the disclosure, the NFT asset ID and the wall ID may be recognized by an external device via near field communication (NFC).

In an embodiment of the disclosure, the NFT asset ID and the wallet ID may be recognized by an external device through a certain reader.

A method of recognizing information about an NFT asset ID and a wallet ID stored in a real asset using a software-based method is not limited to the above description, and the NFT asset ID and the wallet ID may be recognized through various communication methods and various devices.

In an embodiment of the disclosure, when the real asset includes a storage device such as a memory, the NFT asset ID and the wallet ID may be integrated into the real asset by being stored in the storage device of the real asset.

In this case, security measures such as encryption for preventing forgery and falsification may be performed on the NFT asset ID and the wallet ID.

In an embodiment of the disclosure, the NFT asset ID and the wallet ID may be integrated into the real asset in the form of a bar code. The NFT asset ID and the wallet ID integrated in the form of a bar code may be recognized using a bar code reader or the like.

In an embodiment of the disclosure, the NFT asset ID and the wallet ID may be integrated into the real asset by using at least one method.

For example, the NFT asset ID and the wallet ID may be imprinted in a frame by using embossing and also stored in a chip simultaneously and integrated into a portion of the frame.

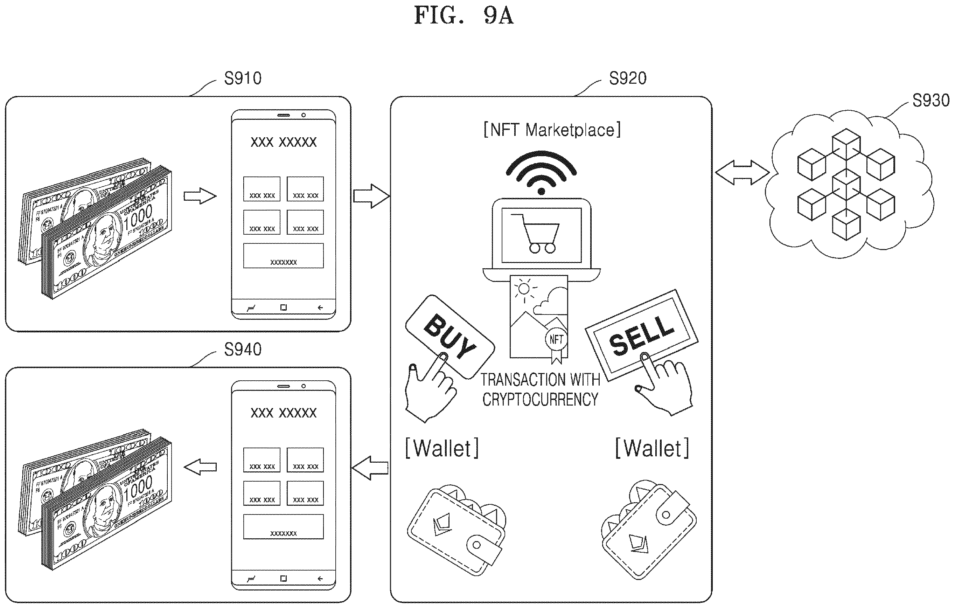

FIG. 9A is a flowchart of a method of trading a digital asset according to the related art.

In the related art, a user who desires to buy a digital asset is not able to directly purchase the digital asset using KRW but instead needs to convert KRW into a cryptocurrency such as Ethereum, Bitcoin, or the like on a cryptocurrency exchange (S910) and then buy the desired digital asset by using the Ethereum or Bitcoin through a digital asset exchange (S920).

When a transfer of ownership of a digital asset occurs in the digital asset exchange, all information regarding the transfer of ownership of the digital asset needs to be recorded on the blockchain (S930). In this process, the user has to pay GAS and a transaction fee as a commission for every transaction to record transaction data on the blockchain.

A transaction of an NFT asset on the digital asset exchange is made only with a cryptocurrency.

When the transfer of ownership occurs, the digital asset is transferred from a seller's wallet to a buyer's wallet. A user may directly create his or her own wallet and directly manage and sell an NFT asset held in the wallet.

In addition, even when selling a user's owned digital asset, the user has to convert, after selling the digital asset through the digital asset exchange, a cryptocurrency such as Ethereum, Bitcoin, or the like received as payment back into KRW on the crypto currency exchange (S940).

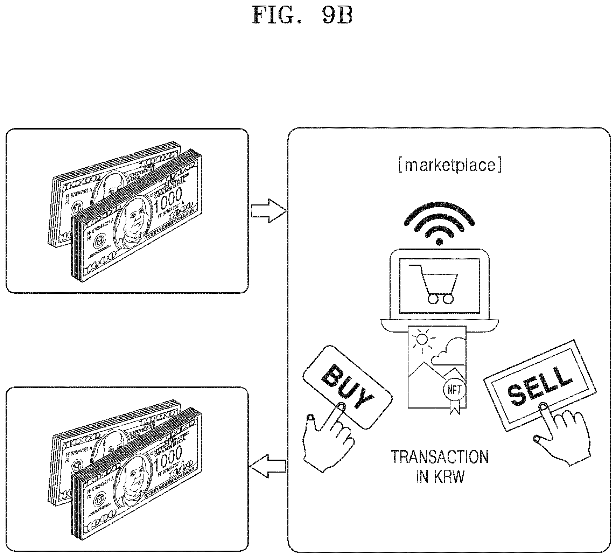

FIG. 9B is a flowchart of a method of trading a digital asset according to an embodiment of the disclosure.

A user who desires to buy a digital asset may buy a digital asset integrated into a real asset by purchasing the real asset directly in KRW, and thus, the user does not need to convert KRW into a cryptocurrency such as Ethereum, Bitcoin, or the like on a cryptocurrency exchange.

Because an NFT asset that is a digital asset is integrated into a real asset, transactions and transfer of ownership of the NFT asset may be made easily by transferring the real asset offline.

Therefore, the user does not need to use a digital asset exchange to perform a transaction of an NFT asset.

In addition, because the transfer of ownership is completed for the NFT asset that is a digital asset by transferring the real asset, information regarding the transfer of ownership does not need to be recorded on the blockchain each time the ownership is transferred.

Therefore, the user does not need to pay GAS and a transaction fee for registration on the blockchain.

In an embodiment of the disclosure, even when information regarding the transfer of ownership is not recorded on the blockchain each time the ownership is transferred, the asset management device 100 may verify the authenticity of a corresponding real asset by using an NFT asset ID and a wallet ID registered on the blockchain during NFT minting.

In an embodiment of the disclosure, a buyer may verify whether the real asset is authentic by recognizing an NFT asset ID and a wallet ID from the real asset.

A transaction for the real asset may be made in KRW.

Even when selling his or her owned digital asset, the user may receive a payment in KRW from a buyer, thereby eliminating the need for conversion on the coin exchange.

In addition, because the wallet ID corresponding to the real asset has already been generated, the user does not need to separately generate a wallet ID for transaction of a digital asset.

This is because, when transfer of ownership occurs, a wallet itself owned by a seller of a digital asset may be transferred to a buyer of the digital asset together with the digital asset, instead of transferring the digital asset from the seller's wallet to a buyer's wallet.

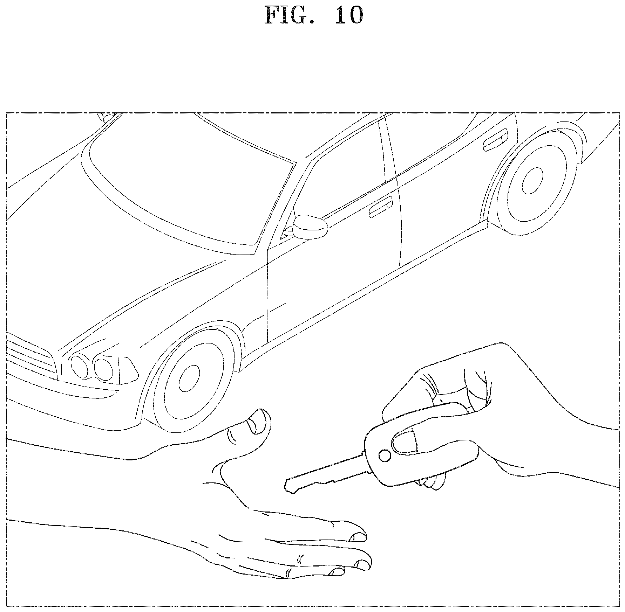

FIG. 10 is a diagram illustrating an example of a method of trading an NFT asset according to an embodiment of the disclosure.

A method of trading an NFT asset according to an embodiment of the disclosure may be substantially the same as a method of trading a movable asset.

A seller may sell an NFT asset by handing over a real asset integrated or linked with the NFT asset to a buyer.

In an embodiment of the disclosure, the real asset may be a single limited production car. The asset management device 100 may generate a digital asset corresponding to the limited production car.

The asset management device 100 may mint the generated digital asset as an NFT to issue an NFT asset.

The asset management device 100 may obtain an NFT asset ID for the issued NFT asset. Descriptions already provided above with respect to the NFT minting method illustrated in FIG. 6 will be omitted below.

The asset management device 100 may generate a unique wallet ID for the limited production car.

In an embodiment of the disclosure, the asset management device 100 may request an external device to generate a unique wallet ID for the limited production car, and receive the generated wallet ID from the external device.

The asset management device 100 may register the NFT asset ID and the wallet ID corresponding to the limited production car together on the blockchain.

The asset management device 100 may integrate the NFT asset ID and the wallet ID corresponding to the limited production car into the car.

A method of integrating the NFT asset ID and the wallet ID into the car that is a real asset may be substantially the same as the method described with reference to FIG. 8.

The method of trading an NFT asset according to an embodiment of the disclosure may be performed by handing over a car and a car's keys.

According to an asset management method of the disclosure, an authenticity verification device may verify whether the above car is the same as the single limited production car, based on the NFT asset ID and the wallet ID integrated into the car.

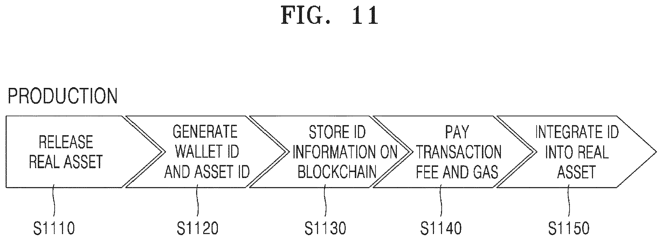

FIG. 11 is a flowchart of a method, performed by a real asset producer, of producing real assets using an asset management method, according to an embodiment of the disclosure.

A producer may produce and release various types of real assets (S1110).

Real assets may be any assets as long as they are tangible, and types of the real assets may be unlimited.

The real asset producer may generate a wallet ID and an asset ID for each produced real asset (S1120).

A method of generating a wallet ID and an asset ID may be substantially the same as in the embodiments of the disclosure of FIGS. 5 and 6.

In an embodiment of the disclosure, an asset ID may be an NFT asset ID.

In an embodiment of the disclosure, the NFT asset ID may be for a digital asset generated by corresponding to a produced real asset.

In an embodiment of the disclosure, the NFT asset ID may be for a digital asset linked with and integrated into a produced real asset. The digital asset linked with and integrated into the real asset may be, for example, a digital asset generated using a painting of a famous painter that may be appreciated only on a display of a particular TV as in the embodiment of the disclosure of FIG.1.

The real asset producer may store the generated wallet ID and asset ID on the blockchain (S1130).

The real asset producer may transmit a request to a miner to store the generated wallet ID and asset ID on the blockchain.

The real asset producer may pay Gas and a transaction fee to the miner in return for storing the generated wallet ID and asset ID on the blockchain (S1140).

The real asset producer may integrate the generated wallet ID and asset ID into the real asset by using the method according to the embodiment of the disclosure of FIG. 8.

The real asset producer may use the asset management device 100 to execute a series of processes illustrated in FIG. 11.

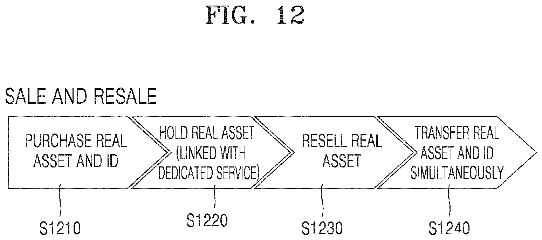

FIG. 12 is a flowchart of an example of trading a real asset by using an asset management method, according to an embodiment of the disclosure.

A real asset produced through the process as shown in FIG. 11 may be purchased by a consumer together with a wallet ID and an asset ID (S1210). However, when purchasing the real asset, the consumer does not necessarily need to know that the wallet ID and the asset ID are purchased together.

Also, the consumer may directly purchase the real asset with KRW in the same way as when purchasing other products.

The consumer may simply think that he or she has just purchased the real asset, but in reality may have purchased the wallet ID and the asset ID together with the real asset.

The consumer who has purchased the real asset may enjoy a dedicated service linked to the real asset while holding the real asset (S1220). In the embodiment of the disclosure of FIG. 1, the dedicated service may be the digital painting C corresponding to the famous painter's work, which is linked to the TV 100. In other words, the famous painter's work C may be appreciated only on one TV.

In an embodiment of the disclosure, the dedicated service may be at least one of an autograph of a popular singer displayed only on the corresponding real asset, a specially produced music video, a video letter, or music played only on the real asset.

However, the dedicated service is not limited thereto, and may include all types of services that may be enjoyed only through the corresponding real asset.

The consumer who owns the real asset may resell the real asset (S1230). The consumer who owns the real asset is free to resell the real asset.

Resale of the real asset by the consumer may be completed by simply receiving payment in KRW and transferring the real asset as in the embodiment of the disclosure of FIG. 10.

Also in this case, the wallet ID and the asset ID may be transferred to a buyer together with the real asset (S1240). However, just as the consumer does not necessarily need to know that the wallet ID and asset ID are purchased together when purchasing the real asset, he or she does not necessarily need to know that the wallet ID and asset ID are transferred together when selling the real asset.

The consumer may simply think that he or she has just sold the real asset, but in reality selling the real asset may be equivalent to transferring the wallet ID and the asset ID together with the real asset.

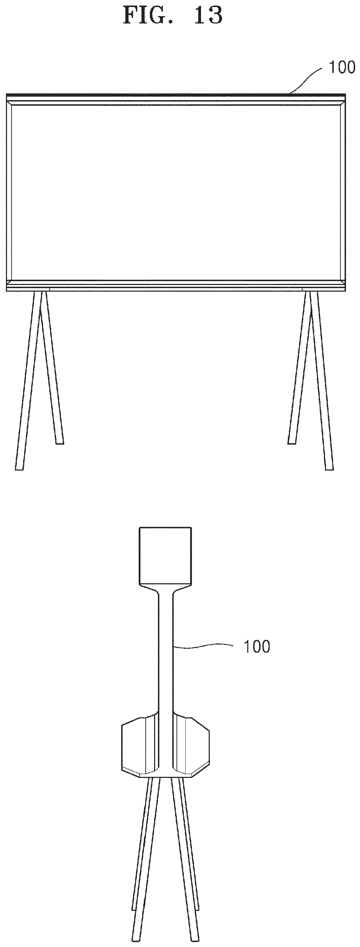

FIG. 13 is a diagram illustrating an example of a real asset according to an embodiment of the disclosure.

The real asset according to the embodiment of the disclosure of FIG. 13 may be a frame-type display device.

The real asset according to the embodiment of the disclosure of FIG. 13 may be produced according to operations S1120 to S1150 of FIG. 11, and simultaneously, a wallet ID and an NFT asset ID may be integrated into the produced real asset.

A producer may manufacture a frame-type display device and perform operations S1120 to S1150 of FIG. 11 using a separate asset management device 100.

In an embodiment of the disclosure, an NFT asset integrated into the frame-type display device may be a specially produced music video of a famous singer that may be played only on the frame-type display device.

In an embodiment of the disclosure, the NFT asset integrated into the frame-type display device may be a digital asset representing the frame-type display device itself. For example, the frame-type display device may have a unique design, shape, and color.

For example, the NFT asset integrated into the frame-type display device may be a virtual frame-type display device having the same shape, design, and color as the frame-type display device. The virtual frame-type display device may be used for the same purpose as the real asset in a virtual space such as the metaverse.

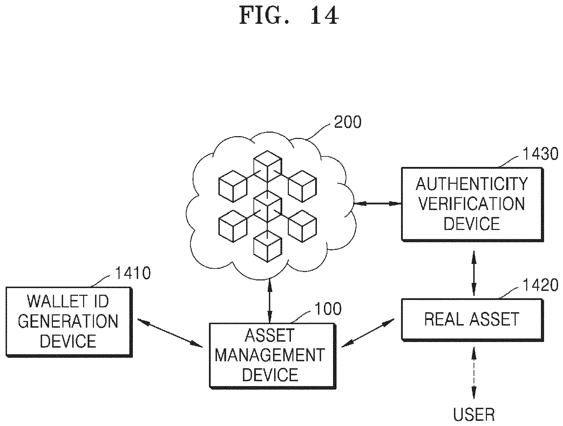

FIG. 14 is a diagram illustrating an example of a blockchain network system according to an embodiment of the disclosure.

Referring to FIG. 14, a blockchain network system 200 according to an embodiment of the disclosure may include one or more node computers constituting a blockchain network. The blockchain network system 200 is a network in which node computers are connected to each other in a P2P manner through the Internet or the like.

In an embodiment of the disclosure, in order to form and manage a blockchain network and to support each node computer to perform a function, a blockchain management server (not shown) may be connected to the blockchain network when necessary. A node computer that wishes to join the blockchain network may be registered on the blockchain network by the blockchain management server.

Node computers belonging to the blockchain network system 200 are not particularly limited as long as they perform general computing functions. For example, node computers may include a smartphone or tablet PC capable of accessing the Internet through mobile communication or Wi-Fi, a desktop PC, a notebook PC, etc. capable of accessing the Internet through a LAN or Wi-Fi, and the like.

According to an embodiment of the disclosure, a node computer may include an asset management device 100 and an authenticity verification device 1430. The asset management device 100 may be a server used by a producer of real assets. In this case, there may be one or more asset management devices connected to the blockchain network system 200.

The asset management device 100 may transmit, to a wallet ID generation device 1410 connected to a corresponding asset management device 100, a request for generation of a wallet ID for a real asset 1420 managed by the corresponding asset management device 100.

The asset management device 100 may receive a generated wallet ID from the wallet ID generation device 1410 connected to the asset management device 100 itself.

By performing NFT minting as in the embodiment of the disclosure of FIG. 6, the asset management device 100 may obtain an NFT asset ID for a digital asset linked to or generated for the real asset 1420.

The asset management device 100 may integrate the wallet ID and the NFT asset ID into the real asset 1420.

The authenticity verification device 1430 may recognize the wallet ID and the NFT asset ID integrated into the real asset 1420.

The authenticity verification device 1430 may verify whether the real asset 1420 is authentic by comparing the recognized wallet ID and NFT asset ID with information recorded on the blockchain network system 200.

In this case, one or more authenticity verification devices 1430 may be connected to the blockchain network system 200.

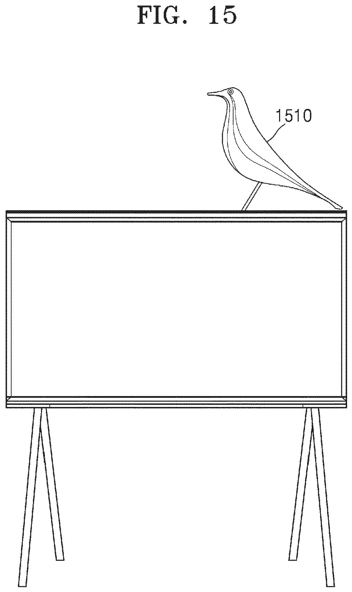

FIG. 15 is a diagram illustrating an example of a real asset according to an embodiment of the disclosure.

In the embodiment of the disclosure of FIG. 15, the real asset may be an ornament 1510 produced by a famous artist in a limited quantity. The asset management device 100 may generate a digital asset corresponding to the ornament 1510.

The asset management device 100 may mint the generated digital asset as an NFT to issue an NFT asset. The asset management device 100 may obtain an NFT asset ID for the issued NFT asset. Descriptions already provided above with respect to the NFT minting method illustrated in FIG. 6 will be omitted below.

The asset management device 100 may generate a unique wallet ID for the ornament 1510.

In an embodiment of the disclosure, the asset management device 100 may request an external device to generate a unique Wallet ID for the ornament 1510 and receive a generated wallet ID from the external device.

The asset management device 100 may register the NFT asset ID and the wallet ID corresponding to the ornament 1510 together on the blockchain.

The asset management device 100 may integrate the NFT asset ID and the wallet ID corresponding to the ornament 1510 into the ornament 1510.

A method of integrating the NFT asset ID and the wallet ID into the ornament 1510 that is a real asset may be substantially the same as the method described with reference to FIG. 8.

Although in the embodiment of the disclosure of FIG. 15, the ornament 1510 for a display device is a real asset, various peripheral devices of the display device including a remote control and an auxiliary device may all be real assets.

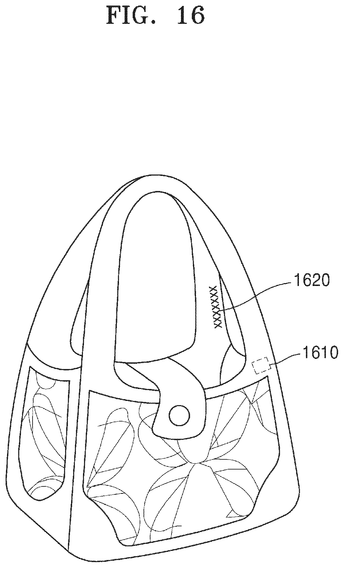

FIG. 16 is a diagram illustrating another example of a real asset according to an embodiment of the disclosure.

In the embodiment of the disclosure of FIG. 16, the real asset may be a bag from a luxury brand. The asset management device 100 may generate a digital asset corresponding to the bag from the luxury brand.

In an embodiment of the disclosure, the asset management device 100 may mint the generated digital asset as an NFT to issue an NFT asset. The asset management device 100 may obtain an NFT asset ID for the issued NFT asset. Descriptions already provided above with respect to the NFT minting method illustrated in FIG. 6 will be omitted below.

In an embodiment of the disclosure, the asset management device 100 may not issue an NFT asset from the generated digital asset. In this case, an asset ID may be registered on the blockchain instead of an NFT asset ID.

The asset management device 100 may generate a unique wallet ID for each bag from the luxury brand.

In an embodiment of the disclosure, the asset management device 100 may request an external device to generate a unique wallet ID for the bag from the luxury brand, and receive a generated wallet ID from the external device.

The asset management device 100 may register the NFT asset ID (asset ID) and the wallet ID corresponding to the bag from the luxury brand together on the blockchain.

The asset management device 100 may integrate the NFT asset ID (asset ID) and the wallet ID corresponding to the bag from the luxury brand into the bag.

A method of integrating the NFT asset ID and the wallet ID into the bag from the luxury brand, which is a real asset, may be substantially the same as the method described with reference to FIG. 8.

For example, the NFT asset ID and the wallet ID may be manufactured in the form of a small chip and attached to a part of the bag (1610).

As another example, the NFT asset ID and the wallet ID may be imprinted in an inconspicuous portion of a bag handle (1620).

Although the bag from the luxury brand is exemplified as a real asset in the embodiment of the disclosure of FIG. 16, various types of products including clothes, watches, precious metals, accessories, shoes, bowls, sculptures, paintings, etc. may be real assets managed using an asset management method of the disclosure.

An asset management method according to an embodiment of the disclosure may also be implemented in the form of computer-readable recording media including instructions executable by the computer, such as a program module executed by the computer. The computer-readable recording media may be any recording media that are accessible by the computer, and examples thereof may include both volatile and non-volatile media and both detachable and non-detachable media. The computer-readable recording media may include program instructions, data files, data structures, etc. either alone or in combination. The program instructions recorded on the computer-readable recording media may be designed and configured specially for the disclosure or may be known to and be usable by those skilled in the art of computer software. Examples of the computer-readable recording media include magnetic media such as hard disks, floppy disks, and magnetic tape, optical media such as compact disk-ROM (CD-ROM) and digital versatile disks (DVDs), magnetooptical media such as floptical disks, and hardware devices that are specially configured to store and perform program instructions, such as ROM, RAM, flash memory, etc. Examples of program instructions include not only machine code such as that generated by a compiler but also high-level language code executable by a computer using an interpreter or the like.

The above description of the disclosure is provided for illustration, and it will be understood by one of ordinary skill in the art that changes in form and details may be readily made therein without departing from technical idea or essential features of the disclosure. Accordingly, the above-described embodiments of the disclosure and all aspects thereof are merely examples and are not limiting. For example, each component defined as an integrated component may be implemented in a distributed fashion, and likewise, components defined as separate components may be implemented in an integrated form.

According to an embodiment of the disclosure, an asset management method includes obtaining a non-fungible token (NFT) asset identifier (ID) of an NFT asset linked to a real asset, mapping the obtained NFT asset ID to a wallet ID that is uniquely generated in a one-to-one manner in association with the real asset, and registering the mapped NFT asset ID and wallet ID on a blockchain, wherein the NFT asset is uniquely identifiable in association with the real asset through the registered NFT asset ID and the wallet ID that are integrated into the real asset.

According to an embodiment of the disclosure, the obtaining of the NFT asset ID may include generating a digital asset corresponding to the real asset and minting the digital asset as an NFT.

According to an embodiment of the disclosure, the obtaining of the NFT asset ID may include determining the real asset as an asset to be linked to the NFT asset and integrating the NFT asset ID into the determined real asset.

According to an embodiment of the disclosure, ownership of the NFT asset may be transferred by transferring the real asset offline.

According to an embodiment of the disclosure, the NFT asset may be associated with at least one of a video device and an audio device included in or related to the real asset to provide a certain service.

According to an embodiment of the disclosure, the NFT asset ID and the wallet ID may be integrated into the real asset by using at least one of a hardware-based and software-based method.

The NFT asset ID and the wallet ID are integrated into the real asset by using the software-based method so that at least one of the NFT asset ID and the wallet ID may be recognizable by an external device via near field communication (NFC).

According to an embodiment of the disclosure, the NFT asset ID and the wallet ID may be integrated into the real asset in a form of a bar code.

According to an embodiment of the disclosure, the asset management method may further include transmitting, to an external device, a request to generate the wallet ID in association with the real asset and receiving, in response to the request, the wallet ID that is uniquely generated in the one-to-one manner in association with the real asset.

According to an embodiment of the disclosure, authenticity of at least one of the NFT asset and the real asset may be verified by using the NFT asset ID and the wallet ID integrated into the real asset.

According to an embodiment of the disclosure, an asset management device includes a memory storing one or more instructions and a processor configured to execute the one or more instructions stored in the memory to obtain an NFT asset ID of an NFT asset linked to a real asset, map the obtained NFT asset ID to a wallet ID that is uniquely generated in a one-to-one manner in association with the real asset, register the mapped NFT asset ID and wallet ID on a blockchain, and control the NFT asset to be uniquely identifiable in association with the real asset through the registered NFT asset ID and the wallet ID that are integrated into the real asset.

According to an embodiment of the disclosure, the processor may be further configured to execute the one or more instructions to generate a digital asset corresponding to the real asset and the obtaining obtains the NFT asset ID by minting the digital asset as an NFT.

According to an embodiment of the disclosure, the processor may be further configured to execute the one or more instructions to determine the real asset as an asset to be linked to the NFT asset and control the NFT asset ID to be integrated into the determined real asset.

According to an embodiment of the disclosure, ownership of the NFT asset may be transferred by transferring the real asset offline.

According to an embodiment of the disclosure, the NFT asset may be associated with at least one of a video device and an audio device included in or related to the real asset to provide a certain service.

According to an embodiment of the disclosure, the NFT asset ID and the wallet ID may be integrated into the real asset by using at least one of a hardware-based method and a software-based method.

The NFT asset ID and the wallet ID are integrated into the real asset by using the software-based method so that at least one of the NFT asset ID and the wallet ID may be recognizable by an external device via NFC.

According to an embodiment of the disclosure, the processor may be further configured to execute the one or more instructions to transmit, to an external device, a request to generate the wallet ID for the real asset and receive, in response to the request, the wallet ID that is uniquely generated in the one-to-one manner in association with the real asset.

According to an embodiment of the disclosure, the processor may be further configured to execute the one or more instructions to verify authenticity of at least one of the NFT asset and the real asset by using the NFT asset ID and the wallet ID integrated into the real asset.

According to an embodiment of the disclosure, a computer-readable recording medium has recorded thereon a program for performing an asset management method including obtaining an NFT asset ID of an NFT asset linked to a real asset, mapping the obtained NFT asset ID to a wallet ID that is uniquely generated in a one-to-one manner in association with the real asset, and registering the mapped NFT asset ID and wallet ID on a blockchain, wherein the NFT asset is uniquely identifiable in association with the real asset through the registered NFT asset ID and the wallet ID that are integrated into the real asset.

## Claims

1. An asset management method comprising:
obtaining a non-fungible token (NFT) asset identifier (ID) of an NFT asset linked to a real asset;
mapping the obtained NFT asset ID to a wallet ID that is uniquely generated in a one-to-one manner in association with the real asset; and
registering the mapped NFT asset ID and wallet ID on a blockchain,
wherein the NFT asset is uniquely identifiable in association with the real asset through the registered NFT asset ID and the wallet ID that are integrated into the real asset.

2. The asset management method of claim 1, wherein the obtaining of the NFT asset ID comprises:
generating a digital asset corresponding to the real asset; and
obtaining the NFT asset ID by minting the digital asset as an NFT.

3. The asset management method of any one of the preceding claims 1 to 2, wherein the obtaining of the NFT asset ID comprises:
determining the real asset as an asset to be linked to the NFT asset; and
integrating the NFT asset ID into the determined real asset.

4. The asset management method of any one of the preceding claims 1 to 3, wherein ownership of the NFT asset is transferred by transferring the real asset offline.

5. The asset management method of any one of the preceding claims 1 to 4, wherein the NFT asset is associated with at least one of a video device and an audio device included in or related to the real asset to provide a certain service.

6. The asset management method of any one of the preceding claims 1 to 5, wherein the NFT asset ID and the wallet ID are integrated into the real asset by using at least one of a hardware-based method and a software-based method.

7. The asset management method of claim 6, wherein the NFT asset ID and the wallet ID are integrated into the real asset by using the software-based method so that at least one of the NFT asset ID and the wallet ID is recognizable by an external device via near field communication (NFC).

8. The asset management method of any one of the preceding claims 1 to 7, wherein the NFT asset ID and the wallet ID are integrated into the real asset in a form of a bar code.

9. The asset management method of any one of the preceding claims 1 to 8, further comprising:
transmitting, to an external device, a request to generate the wallet ID in association with the real asset; and
receiving, in response to the request, the wallet ID that is uniquely generated in the one-to-one manner in association with the real asset.

10. The asset management method of any one of the preceding claims 1 to 9, wherein authenticity of at least one of the NFT asset and the real asset is verified by using the NFT asset ID and the wallet ID integrated into the real asset.

11. An asset management device(100) comprising:
a memory(120) storing one or more instructions; and
a processor(110) configured to execute the one or more instructions stored in the memory(120) to:
obtain a non-fungible token (NFT) asset identifier (ID) of an NFT asset linked to a real asset,
map the obtained NFT asset ID to a wallet ID that is uniquely generated in a one-to-one manner in association with the real asset,
register the mapped NFT asset ID and wallet ID on a blockchain, and
control the NFT asset to be uniquely identifiable in association with the real asset through the registered NFT asset ID and the wallet ID that are integrated into the real asset.

12. The asset management device of claim 11, wherein the processor(1 10) is further configured to execute the one or more instructions to:
generate a digital asset corresponding to the real asset, and
obtain the NFT asset ID by minting the digital asset as an NFT.

13. The asset management device of claim 11 , wherein the processor(110) is further configured to execute the one or more instructions to:
determine the real asset as an asset to be linked to the NFT asset, and
control the NFT asset ID to be integrated into the determined real asset.

14. The asset management device of any one of the preceding claims 11 to 13, wherein ownership of the NFT asset is transferred by transferring the real asset offline.

15. A computer-readable recording medium having recorded thereon a program to perform an asset management method according to any one of claims 1-10.
